# FASCICULE DE BREVET EUROPEEN

(11) **EP 2 909 674 B1**
(45) Date de publication et mention de la délivrance du brevet: **17.05.2017**
(21) Numéro de dépôt: 13785381.8
(22) Date de dépôt: 17.10.2013
(51) Int. Cl.: G02C 7/02

(54) **PROCEDE DE DETERMINATION D'UNE FACE D'UN VERRE OPHTALMIQUE COMPORTANT UNE PORTEUSE ET UNE NAPPE FRESNEL**
BESTIMMUNGSVERFAHREN EINER FLÄCHE EINES BRILLENGLASES, DIE EINE TRÄGERSTRUKTUR UND EINE FRESNELSTRUKTUR UMFASST
METHOD FOR DETERMINING A SURFACE OF AN OPHTHALMIC LENS COMPRISING A CARRIER AND A FRESNEL STRUCTURE

(30) Priorité: 18.10.2012 EP 12290354
(43) Date de publication de la demande: 26.08.2015
(73) Titulaire: Essilor International (Compagnie Générale d'Optique), 94220 Charenton-le-Pont (FR)
(72) Inventeur: AMIR, Bruno, F-94220 Charenton-le-Pont (FR); COLAS, Pauline, F-94220 Charenton-le-Pont (FR); TESSIERES, Mélanie, F-94220 Charenton-le-Pont (FR)
(74) Mandataire: Cabinet Plasseraud
(86) Numéro de dépôt international: PCT/EP2013/071790
(87) Numéro de publication internationale: WO 2014/060552

(56) Documents cités:
- EP-A1- 0 276 331
- EP-A1- 0 368 751
- WO-A1-2008/056575
- DE-A1- 2 312 872
- FR-A1- 2 623 921

## Description

### Domaine de l'Invention

La présente invention a pour objet un procédé détermination d'une face d'un verre ophtalmique portant une surface constituée par une superposition d'une nappe Fresnel et d'une surface continue nommée « porteuse ». L'invention concerne également un verre ophtalmique comportant une telle face. La présente invention concerne également un produit de programme d'ordinateur comprenant une série d'instructions qui lorsque chargée sur un ordinateur entraine l'exécution par ledit ordinateur des étapes des procédés selon l'invention. L'invention propose en outre un support lisible par ordinateur portant une série d'instructions du produit de programme d'ordinateur.

Le procédé selon l'invention permet de déterminer une nappe Fresnel permettant de compenser des effets géométriques induits par une variation de courbure de la porteuse sur la lumière incidente sur ladite face. Ce procédé est particulièrement utile lorsque la courbure de la face du verre ophtalmique est adaptée pour faciliter un montage dans une monture des lunettes.

### Arrière plan de l'invention

Cette section est destinée à introduire le lecteur aux divers aspects de l'art, qui peuvent être liés à divers aspects de la présente invention qui sont décrits et/ou revendiqués ci-dessous. Cette discussion est considérée comme utile pour fournir au lecteur des informations d'arrière-plan afin de faciliter une meilleure compréhension des différents aspects de la présente invention. En conséquence, il doit être entendu que ces déclarations doivent être lues à cette lumière, et non comme un aveu de l'art antérieur.

Tout verre ophtalmique, destiné à être porté dans une monture, est associé à une prescription. La prescription en matière ophtalmique peut comprendre une prescription de puissance, positive ou négative, ainsi qu'une prescription d'astigmatisme. Ces prescriptions correspondent à des corrections à apporter au porteur des verres pour corriger les défauts de sa vision. Un verre est monté dans la monture en fonction de la position des yeux du porteur par rapport à la monture.

Dans les cas les plus simples, la prescription se réduit à une prescription de puissance, positive ou négative, et éventuellement d'astigmatisme, le verre est alors dit « unifocal ». Lorsque la prescription ne comporte pas d'astigmatisme, le verre présente une symétrie de révolution. Il est simplement monté dans la monture de sorte que la direction principale du regard du porteur coïncide avec l'axe de symétrie du verre. Pour les porteurs presbytes, la valeur de la correction de puissance est différente en vision de loin et en vision de près, du fait des difficultés d'accommodation en vision de prés. La prescription est alors composée d'une valeur de puissance en vision de loin et d'une addition (ou progression de puissance) représentative de l'incrément de puissance entre la vision de loin et la vision de près; ceci revient a une prescription de puissance en vision de loin et a une prescription de puissance en vision de près. Les verres adaptés aux porteurs presbytes sont des verres multifocaux progressifs ; ces verres sont décrits par exemple dans EP 2 249 195 B1 ou EP 2 251 733 B1. Les verres ophtalmiques multifocaux progressifs comprennent une zone de vision de loin, une zone de vision de près, une zone de vision intermédiaire, une méridienne principale de progression traversant ces trois zones. Ces verres sont généralistes, en ce qu'ils sont adaptées aux différents besoins courants du porteur. On définit des familles de verres multifocales progressives, chaque verre d'une famille étant caractérisé par une addition, qui correspond à la variation de puissance entre la zone de vision de loin et la zone de vision de près. Plus précisément, l'addition, notée A, correspond à la variation de puissance sur la méridienne entre un point VL de la zone de vision de loin et un point VP de la zone de vision de près, qui sont appelés respectivement point de référence de la vision de loin et point de référence de la vision de près, et qui représentent les points d'intersection du regard et de la surface de la verre pour une vision a l'infini et pour une vision de lecture.

De manière classique, un verre peut être défini par sa base (ou sphère moyenne de sa face avant en vision de loin) et par une addition de puissance dans le cas d'un verre multifocal. A partir de verres semi-finis, dont seule une face est conformée avec un couple addition/base donné, il est possible de préparer des verres adaptés a chaque porteur, par simple usinage d'une face de prescription qui est généralement sphérique ou torique.

Pour tout verre ophtalmique, les lois de l'optique expliquent l'apparition de défauts optiques quand les rayons lumineux s'écartent de l'axe central du verre. Ces défauts connus qui comprennent entre autres un défaut de puissance et un défaut d'astigmatisme peuvent être appelés de façon générique « défauts d'oblicité des rayons ». L'homme de l'art sait compenser partiellement ces défauts. Par exemple, EP-A-0 990 939 propose un procédé de détermination par optimisation d'un verre ophtalmique pour un porteur ayant une prescription d'astigmatisme. Les défauts d'oblicité ont aussi été identifiés pour les verres multifocaux progressifs. Par exemple, WO-A-98 12590 décrit une méthode de détermination par optimisation d'un jeu de verres ophtalmiques multifocaux.

Un verre ophtalmique comporte une zone centrale « optiquement utile » qui peut s'étendre sur la totalité du verre. On entend par zone optiquement utile, une zone dans laquelle les défauts de courbure et d'astigmatisme ont été minimisés pour permettre un confort visuel satisfaisant pour le porteur. Sur un verre progressif, la zone centrale optiquement utile couvrira au moins la zone de vision de loin, la zone de vision de près et la zone de progression.

Généralement, la zone optiquement utile couvre la totalité du verre qui présente un diamètre de valeur limitée. Cependant, dans certains cas, une zone « périphérique » est prévue sur les pourtours du verre ophtalmique. Cette zone est dite « périphérique » car elle ne répond pas aux conditions de correction optique prescrite et présente des défauts d'oblicités importants. Un raccord doit alors être prévu entre la zone centrale optiquement utile et la zone périphérique.

Il existe principalement deux situations dans lesquelles un verre ophtalmique présente une telle zone périphérique. D'une part, lorsque le verre présente un diamètre important qui peut être imposé par la forme de la monture, par exemple une monture allongée avec un fort galbe, et d'autre part lorsque la prescription de puissance est élevée, le verre présentant alors une épaisseur bord ou une épaisseur centre importante que l'on cherche à réduire.

Dans le cas d'un verre ophtalmique destiné à être adapté dans une monture galbée, par exemple à 15 degrés, le verre présente une face avant de forte cambrure (ou forte base), entre 6 dioptries (notée « D » dans ce qui suit) et 10 dioptries, et une face arrière calculée spécifiquement pour atteindre la correction optimale de l'amétropie du porteur au centre optique et dans le champ de vision. Par exemple, pour une face avant ayant une courbure donnée, la face arrière est usinée pour assurer la correction en fonction de l'amétropie de chaque porteur.

La forte cambrure de la face avant entraine une forte épaisseur du verre sur les bords dans le cas d'un verre à puissance négative ou une forte épaisseur du verre au centre dans le cas d'un verre à puissance positive. Ces fortes épaisseurs alourdissent le poids des verres, ce qui nuit au confort du porteur et les rendent inesthétiques. De plus, pour certaines montures, l'épaisseur bord doit être contrôlée pour permettre le montage du verre dans la monture.

Pour des verres négatifs, les épaisseurs bords peuvent être réduites par rabotage grâce à une facette manuelle. Un amincissement du verre peut également être contrôlé par optimisation optique. Une asphérisation ou une atorisation peuvent être calculées, au moins pour une des faces du verre, en prenant en compte les conditions de port du verre par rapport à un verre de faible cambrure de même prescription, afin de diminuer les épaisseurs centre et bord du verre de forte cambrure.

De telles solutions d'asphérisation ou d'atorisation optiques sont par exemple décrites dans les documents US-A-6 698 884, US-A-6 454 408, US-A-6 334 681, USA- 6 364 481 ou encore WO-A-97 35224.

Par ailleurs, dans le cas d'un verre à forte prescription, le verre détouré présente une épaisseur bord importante, coté nasal pour un verre positif (cas d'un porteur hypermétrope) et coté temporal pour un verre négatif (cas d'un porteur myope). Ces surépaisseurs bords compliquent le montage du verre dans la monture et alourdissent le port des verres ophtalmiques.

EP 2 028 529 A1 décrit un procédé pour déterminer les deux faces d'un verre ophtalmique prenant en compte la prescription, des informations sur la position du verre par rapport aux yeux du porteur et une information sur la géométrie de la monture dans laquelle les verres doivent être montés.

Cette première solution de l'art antérieur propose d'adapter la courbure de la face avant d'un verre ophtalmique pour améliorer l'esthétique du montage du verre dans la monture.

WO 2008/037892 décrit un procédé pour déterminer un verre ophtalmique comportant une zone optiquement utile, une zone dite « périphérique » telle que décrite plus haut permettant de réduire l'épaisseur bord et/ou centre du verre ainsi qu'une zone de raccord possédant un profil de courbure optimisé pour le confort du porteur.

Cette solution de l'art antérieur propose de réduire l'épaisseur bord et/ou centre des verres ophtalmiques en asphérisant ou en atorisant localement une face du verre connaissant l'autre face pour faciliter le montage dans des montures de lunettes. La solution proposée présente un raccord entre la zone centrale optiquement utile et la zone périphérique amincie. La tenue de la prescription se réduit à la zone utile optiquement. Cette solution n'est pas acceptée par tous les porteurs en raison de la zone « périphérique » dans laquelle la vision n'est pas corrigée. La publication DE 2 312 872 décrit une lentille comportant une structure de Fresnel venant s'ajouter à une courbure de base sur sa face avant. La structure de Fresnel permet de modifier la puissance optique de la lentille.

Les solutions proposées dans l'art antérieur ne permettent pas de résoudre simultanément les problèmes posés par l'esthétique du montage d'un verre ophtalmique dans la monture et ceux posés par le montage dans les montures..

De plus, il existe toujours un besoin d'un verre qui satisfasse mieux les porteurs avec des performances optiques optimales tout en présentant une épaisseur réduite pour améliorer l'aspect esthétique du verre et le confort du porteur.

Le problème technique que la présente invention vise à résoudre est de faciliter le montage d'un verre ophtalmique dans une monture de lunettes, où le verre est dépourvu de zone « périphérique » et/ou de zone de raccord dans lesquelles la prescription de puissance n'est pas tenue ou n'est que partiellement tenue. Pour ce faire l'invention propose de superposer sur une face d'un verre ophtalmique une porteuse et une nappe Fresnel asphérique, où la porteuse a un profil de courbure contraint pour permettre un montage aisé dans une monture de lunettes, et où la nappe Fresnel asphérique compense les effets géométriques induits par cette adaptation.

### Résumé de l'invention

A cet effet, l'invention propose un procédé de détermination d'une face d'un verre ophtalmique, ladite face portant une surface constituée par une superposition d'une nappe Fresnel et d'une surface continue nommée « porteuse », ladite porteuse comportant un centre géométrique, une première zone centrale et une zone périphérique annulaire, ladite porteuse présentant une symétrie de révolution, ladite nappe Fresnel, la première zone centrale et la zone périphérique étant centrées sur ledit centre géométrique, la première zone centrale étant délimitée par une première frontière circulaire, la zone périphérique étant délimitée d'une part par une deuxième frontière circulaire et d'autre part par le bord de la face, le procédé étant mis en oeuvre par ordinateur et comprenant une étape pour :
(S1) déterminer un premier profil de courbure de ladite porteuse dans ladite première zone centrale et un deuxième profil de courbure de ladite porteuse dans ladite zone périphérique ;
(S10) déterminer un premier rayon de ladite première frontière et un deuxième rayon de ladite deuxième frontière;
(S20) déterminer un troisième profil de courbure d'une zone de transition de ladite porteuse, où ladite zone de transition est contigüe à la première zone centrale et à ladite zone périphérique annulaire, et déterminer un profil de courbure complet de la porteuse comportant lesdits premier, deuxième et troisième profil de courbure de la porteuse ;
(S30) déterminer un profil de courbure cible de la face où ledit profil de courbure cible est identique dans ladite première zone centrale au premier profil de courbure de la porteuse ;
(S40) déterminer un profil de courbure continu à partir d'une différence entre ledit profil de courbure cible et ledit profil de courbure complet de la porteuse ;
(S50) déterminer la nappe Fresnel par un découpage dudit profil de courbure.

Selon les modes de réalisation, le procédé de détermination d'une face d'un verre ophtalmique selon l'invention peut comprendre une ou plusieurs des caractéristiques suivantes:
- ledit premier profil de courbure de la porteuse présente une première courbure constante sur la première zone centrale et le profil de courbure cible de la face présente une courbure constante sur la première zone centrale, la zone de transition et la zone périphérique où ladite courbure constante est égale à ladite première courbure.
- ledit premier profil de courbure de la porteuse présente une première courbure constante sur la première zone centrale, ledit deuxième profil de courbure de la porteuse présente une deuxième courbure constante sur la zone périphérique et le profil de courbure cible de la face présente sur la zone périphérique une courbure constante.
- La nappe Fresnel comportant une pluralité d'anneaux centrés sur le centre géométrique, chaque anneau étant déterminé à partir du profil de courbure continu et d'une hauteur d'anneau donnée, où le premier rayon et ladite hauteur d'anneau sont déterminés de façon à ce que la nappe Fresnel soit dépourvue d'anneau dans une deuxième zone centrale circulaire centrée sur ledit centre géométrique et de rayon supérieur ou égal à 15 mm.
- le troisième profil de courbure est déterminé de sorte que la porteuse a une représentation continument dérivable jusqu'à l'ordre 4 et de sorte que le profil de courbure complet de la porteuse a une représentation continument dérivable jusqu'à l'ordre 4 et que le profil de courbure cible de la face a une représentation continument dérivable jusqu'à l'ordre 4.
- le troisième profil de courbure suit une loi polynomiale d'ordre 3 en fonction de la distance au centre géométrique.
- le deuxième rayon est déterminé de sorte que la valeur du deuxième rayon est inférieure à la valeur de la capacité temporale dudit verre.
- ladite face est une face avant du verre ou une face arrière du verre.

Un avantage du procédé selon l'invention vient de ce que la compensation de la variation de la courbure de la porteuse est supportée par la face qui comprend la porteuse. Ainsi, si la porteuse est placée sur la face avant d'un verre semi-fini, la face arrière du verre semi-fini reste disponible pour être usinée et porter la prescription (tore, prisme, progression, paramètres de port...) comme pour un verre semi-fini classique. L'usinage de la face arrière n'est pas modifié.

Les avantages de verres ophtalmiques réalisés selon l'invention portant des prescriptions « classiques » sont, à prescriptions égales : une réduction importante des épaisseurs et donc de la masse du verre et un montage facilité parce que la face avant peut être configurée pour porter sur sa périphérie une courbure sensiblement égale celle de la monture même pour une monture de lunette de type cambrée.

En outre, les verres réalisés selon l'invention sont dépourvus de discontinuité optique : la zone utile optiquement couvre l'ensemble du verre. Autrement dit, le port d'un verre selon l'invention ne produit pas de saut d'image pour le porteur du verre lorsque ce dernier change sa direction de regard.

Bien que mettant en oeuvre des surfaces Fresnel, des inconvénients connus induits par les surfaces Fresnel sont réduits. Par exemple, les images parasites provoquées par les surfaces Fresnel ne gênent pas le porteur lorsque la disposition des surfaces Fresnel dans le verre est adaptée.

Plus spécifiquement, on présente brièvement 4 exemples, non limitatifs, de modes de réalisation particuliers de verre ophtalmique avantageux. Les procédés permettant de déterminer une face de ces exemples de verres ophtalmiques seront détaillés plus bas.

Premier mode de réalisation avantageux : On considère le cas d'un verre ophtalmique fini ayant une prescription positive (Base 8) et destiné être monté dans monture classique (Base 4).

Un verre classique portant cette prescription sera difficile à monter dans une telle monture en raison de l'écart important entre la courbure de la monture et celle de la face avant du verre.

A prescription égale, un verre dont la face avant est déterminée par un procédé selon l'invention avec une zone périphérique aplanie (Base 4) aura un montage dans des montures cerclées facilité grâce à l'adaptation des courbures entre monture et zone périphérique de la face avant. Le montage du verre selon l'invention est également facilité dans des montures percées ; dans ce dernier cas, l'opération de perçage est facilitée par la courbure réduite de la zone périphérique.

Deuxième mode de réalisation avantageux : on considère le cas d'un verre ayant une prescription fortement positive (Base 13) et destiné être monté dans monture classique (Base 4) avec une face arrière sphérique.

Dans le cas d'un verre classique, le diamètre du verre est extrêmement réduit en raison de la courbure élevée de la face avant qui induit une épaisseur aux bords importante. La demanderesse propose le verre OMEGA^{®} qui permet d'augmenter sensiblement le diamètre du verre, mais en contrepartie présente, sur la face avant, une inversion de courbure qui a pour effet de restreindre le champ de vue du porteur.

A prescription égale, un verre dont la face avant est déterminée par un procédé selon l'invention comportant une zone périphérique aplanie (Base 4) verra son montage facilité par les mêmes effets que ceux décrits ci-dessus. Par rapport aux verres de l'art antérieur, le verre selon l'invention aura un diamètre augmenté et un champ de vue élargi.

Troisième mode de réalisation avantageux : On considère le cas d'un verre ayant une prescription négative (Base 4) et destiné être monté dans monture de type cambrée (Base 8).

Un verre classique portant cette prescription sera difficile à monter dans une telle monture en raison de l'écart important entre la courbure de la monture et celle de la face avant du verre.

A prescription égale, un verre dont la face avant est déterminée par un procédé selon l'invention avec une zone périphérique courbée (Base 8) aura un montage dans des montures cerclées facilité par l'adaptation des courbures entre monture et zone périphérique. Par ailleurs la gamme de prescription de tels verres est étendue et peut atteindre -6D à -8D selon l'indice de réfraction du matériau constituant le verre.

Quatrième mode de réalisation avantageux : On considère le cas d'un verre ayant une courbure face avant classique (Base 4), portant une prescription fortement négative (-10D) et destiné être monté dans monture de type classique (Base 4).

De tels verres ont généralement une épaisseur importante sur les bords ; ils sont donc en général réalisés en diamètres inférieurs à 60mm.

A prescription égale, un verre dont la face arrière est déterminée par un procédé selon l'invention (c'est-à-dire en considérant une porteuse en face arrière comportant une zone périphérique aplanie (Base 4) a, à diamètre égal une épaisseur réduite sur ses bords, ou à épaisseur bord égale un diamètre augmenté.

### Brève description des dessins

L'invention sera mieux comprise et illustrée au moyen des modes de réalisation et ses exemples suivants d'exécution, nullement limitatifs, en référence aux figures annexées sur lesquelles:
**Figure 1a****,** montre une vue en coupe schématique d'une face d'un verre ophtalmique déterminée par un procédé selon l'invention;
**Figure 1b****,** présente une vue en coupe schématique d'une nappe Fresnel supportée par une porteuse de la face présentée sur la figure 1a;
**Figure 1c****,** présente une vue en coupe schématique de la porteuse de la face présentée sur la figure 1a;
**Figure 1d****,** présente une vue de dessus schématique de la porteuse représentée sur la figure 1c;
Figure 2 présente un ordinogramme d'un procédé de détermination d'une face d'un verre ophtalmique selon l'invention ;

### Description détaillée des modes de réalisation préférés

Il est entendu que les descriptions de la présente invention ont été simplifiées pour illustrer les éléments qui sont pertinents pour une compréhension claire de la présente invention, tout en éliminant, à des fins de clarté, de nombreux autres éléments trouvés dans les procédés de détermination de face de verres ophtalmiques. Cependant, parce qu'ils sont bien connus dans l'art antérieur, une discussion détaillée de ces éléments n'est pas prévue ici. La présente divulgation est dirigée vers toutes ces variations et les modifications connues de l'homme de l'art.

Dans le cadre de cette demande de brevet, l'expression « verre ophtalmique » décrit aussi bien un verre ophtalmique fini, dont les deux faces sont conformées pour corriger la vision d'un porteur dans des conditions de port données qu'un bloc semi-fini (« semi-finished lens blank » en anglais) où un bloc semi-fini comporte une face finie et une deuxième face destinée à être usinée pour devenir un verre ophtalmique fini tel que présenté plus haut. Dans cette deuxième situation, la face finie peut être concave ou convexe et correspondre à la face avant ou à la face arrière du futur verre fini.

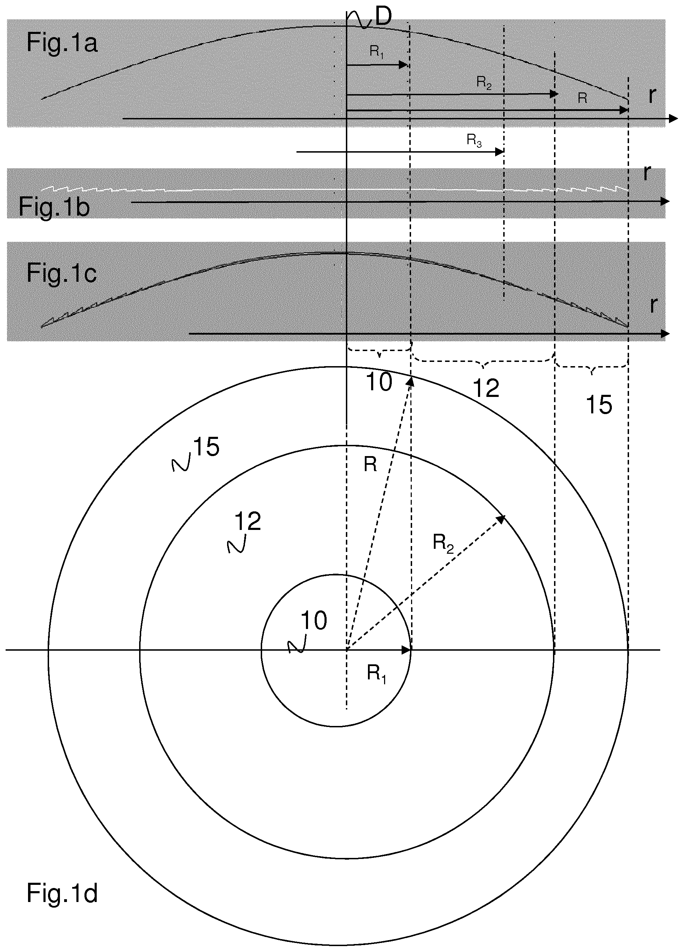

Dans la description de figure 1c, on considère une face d'un verre ophtalmique représentée en vue de coupe radiale dans un repère orthonormé dont l'axe des abscisses r suit la direction d'un rayon du verre et où l'axe des ordonnées D passe par le centre géométrique de la face. Cette face peut être aussi bien la face avant du verre qui est opposée au porteur de lunettes (comme illustré plus haut sur les trois exemples de mode de réalisation du verre selon l'invention) que la face arrière du verre (comme illustré plus haut sur le quatrième exemple de mode de réalisation du verre selon l'invention).

La face du verre selon l'invention est déterminée comme une superposition d'une porteuse présentant une symétrie de révolution (montrée dans le même repère orthonormé sur la figue 1a) et d'une nappe Fresnel asphérique révolution (montrée dans le même repère orthonormé sur la figue 1b). La nappe Fresnel asphérique constitue une microstructure réalisée par découpage d'une nappe continue asphérique et sera décrite plus bas. La porteuse désigne une surface continue portant la microstructure. En tout point de la face du verre, la hauteur du point selon l'axe D peut s'exprimer comme la somme algébrique d'une hauteur selon l'axe D de la surface continue et d'une hauteur selon l'axe D de la nappe Fresnel asphérique.

La porteuse est représentée en vue de dessus sur la figure 1d et en coupe sur la figure 1c dans le repère orthonormé (r, D). La porteuse présente une symétrie de révolution, et est composée de trois zones délimitées suivant leur rayon : une zone centrale circulaire 10; une zone périphérique annulaire 15 et une zone de transition 12 reliant la zone centrale 10 et la zone périphérique 15.

La surface de la porteuse est continument dérivable jusqu'à l'ordre 4 d'un point de vue mathématique. La zone de transition 12 de la porteuse est en particulier déterminée de manière à permettre cette continuité mathématique et assure que les caractéristiques optiques de la zone centrale 10 ne sont pas modifiées par les contraintes imposées à la zone périphérique 15.

Les trois zones 10, 12 et 15 de la face sont centrées sur le même point; de préférence sur le centre géométrique de la face comprenant la porteuse, pour des raisons de facilité de réalisation des microstructures composant la nappe Fresnel.

Les trois zones 10, 12 et 15 de la face ont des contours circulaires. Sur la figure 1d, la face présente un bord à forme circulaire de rayon R, la zone centrale 10 est délimitée par une première frontière qui forme un cercle de premier rayon R1. La zone périphérique 15 est délimitée d'une part par une deuxième frontière circulaire de deuxième rayon R2 et d'autre part par le bord de la face. La zone de transition et la zone périphérique possèdent une forme annulaire.

Les dimensions de chaque zone sont variables et peuvent être déterminées en fonction de la monture dans laquelle le verre ophtalmique est destiné à être monté et de la prescription. La zone centrale 10 a une dimension suffisamment grande pour assurer au porteur un champ de vue en vision centrale dépourvu d'anneau. La zone de transition 12 doit concilier une largeur suffisamment grande pour permettre la réalisation d'une transition géométrique entre le profil de courbure de la première zone et le profil de courbure de la deuxième zone et une largeur suffisamment petite pour que la zone périphérique annulaire 15 soit assez large pour permettre une adéquation suffisante entre sa courbure et celle de la monture dans laquelle le verre doit être monté.

Dans ce contexte, on considère le premier rayon R1 de la première frontière et le deuxième rayon R2 de la seconde frontière. La zone de transition 12 s'étend alors entre un rayon intérieur égal au rayon R1 de la première frontière et un rayon extérieur qui correspond au rayon R2 de la deuxième frontière.

Sur la figure 1c, les 3 zones de la porteuse sont présentées sur la vue en coupe de la porteuse. En raison de la symétrie de révolution de la porteuse on décrira dans ce qui suit la surface des différentes zones de la porteuse au moyen de leur profil radial de courbure, c'est-à-dire sur la courbe résultant d'une demie-coupe radiale.

Le profil de courbure constituant la zone centrale 10 est appelé « premier profil de courbure », le profil de courbure constituant la zone périphérique 15 est appelé « deuxième profil de courbure ». Le premier et deuxième profil sont connus car imposés respectivement à partir de contraintes de prescription et à partir de contraintes de courbure de la monture.

Le profil de courbure constituant la zone de transition 12 est appelé le troisième profil de courbure.

Avantageusement, le troisième profil de courbure suit une loi polynomiale d'ordre 3 en fonction de la distance radiale à l'axe de symétrie.

La figure 1b représente la nappe Fresnel en vue de coupe dans le repère orthonormé (r, D). Le profil de la nappe Fresnel est constitué de microstructures (appelées aussi « dents ») dont une représentation suivant une vue de dessus correspondrait à une succession d'anneaux concentriques. La nappe Fresnel comporte une deuxième zone centrale, elle aussi centrée sur le centre géométrique de la porteuse, qui est dépourvue de dent et qui possède un rayon R3 supérieur ou égal à 15 mm.

Ce rayon de 15 mm correspond à une zone du verre couverte par un champ de vue d'un porteur en vision centrale de +/- 30 degrés pour une distance verre-centre de rotation de l'oeil du porteur égale à 25,5mm. On souhaite qu'aucun anneau de Fresnel ne se trouve dans cette deuxième zone circulaire pour éviter toute gêne (réflexions parasites) qui serait occasionnée au porteur dans sa vision centrale. Il est connu qu'une telle gêne peut être provoquée par une interaction entre les anneaux de la nappe Fresnel et la lumière incidente.

L'homme du métier, concepteur de verres ophtalmiques, connaît et manipule une « nappe » (ou « layer » en anglais) qui est une représentation d'une surface virtuelle décrivant une évolution d'une hauteur z en tout point d'un plan repéré par ses coordonnées Euclidienne (x,y). Une nappe peut s'ajouter point à point à une surface portée par la face d'un verre ophtalmique. L'ajout d'une nappe à une autre surface est également appelée « addition » ou « superposition » et consiste en une sommation algébrique des composantes suivant leur hauteur ou altitude z. La nappe peut prendre la forme d'une fonction continue, on parlera de « nappe continue » ou de « surface continue », mais peut également comporter des discontinuités selon l'axe D ou en dérivées de D ou avoir une représentation discrète. Un exemple d'utilisation de nappes continues est donné dans la demande internationale déposée par la demanderesse et publiée sous la référence WO2011/000845 A1.

Une porteuse constitue un exemple de nappe continue.

Une nappe Fresnel est un exemple de nappe non continue qui comporte une pluralité d'anneaux et une pluralité de discontinuités suivant l'axe D délimitant les anneaux. Ces discontinuités sont inscrites les unes dans les autres. Parmi les discontinuités, la discontinuité dans laquelle aucune autre discontinuité n'est inscrite est appelée « première discontinuité ». Entre deux discontinuités figure un anneau ou « dent » qui présente un profil asphérique.

La réalisation d'une nappe Fresnel à partir d'une surface continue est une technique bien connue décrite par exemple dans la demande de brevet Européen EP 2217962A1 déposée par la demanderesse et qui concerne une pastille courbe destinée à être fixée sur une face concave d'un composant optique ; cette technique ne sera pas rappelée ici mais on décrit brièvement un exemple illustratif de procédé permettant de déduire un profil radial de la nappe Fresnel à partir d'un profil radial de surface continue. Ce procédé produit une nappe Fresnel à hauteur d'anneau constante.

On considère une hauteur de découpage h.

Dans ce qui suit, la hauteur d'un point de la nappe continue désigne la composante suivant D de ce point. Un point M du profil d'une nappe continue est repéré par sa distance radiale r à l'axe D. A chaque point M du profil radial de la nappe continue correspond un point M' du profil radial de la nappe Fresnel séparé de l'axe D par une distance radiale égale à r.

Pour obtenir un profil radial de nappe Fresnel à partir du profil radial de la surface continue, on parcourt les points M du profil radial de la surface continue à partir de r=0 dans le sens des distances radiales croissantes. Tant que la hauteur du point M est inférieure strictement à la hauteur de découpage h, la hauteur du point M' reste égale à la hauteur du point M. Au point M de la surface continue, qui a une hauteur égale à la hauteur h, correspond un point M' de la nappe Fresnel dont la hauteur est fixée à 0: c'est la première discontinuité. Lorsqu'on poursuit le parcours du profil radial de la surface continue pour les distances radiales supérieures, la hauteur du point M' suit les mêmes variations que celle de la hauteur du point M jusqu'à ce que la hauteur du point M atteigne un multiple entier de la hauteur de découpage h. A la distance radiale où cela se produit, la hauteur du point M' correspondant est à nouveau fixée à 0, c'est la deuxième discontinuité.

Ainsi, le profil radial de la nappe Fresnel présente à l'échelle de la représentation de la figure 1b une succession de « dents » délimitées par des discontinuités suivant l'axe D, appelées encore « sauts » et matérialisées par une différence de hauteur entre deux points : le premier qui a une hauteur égale à la hauteur de découpage, le second qui a une hauteur nulle. Entre deux discontinuités, le profil radial de la nappe Fresnel évolue de la même façon que le profil radial de la nappe continue. En particulier le profil radial de la nappe Fresnel comporte localement les mêmes variations de courbure que le profil radial de la nappe continue.

Les « dents » du profil radial de la nappe Fresnel matérialisent des anneaux dits « de Fresnel » sur la nappe Fresnel. Le profil radial de la surface continue est asphérique comme le profil radial de la nappe Fresnel sur chacune des dents. On parlera donc également d'anneaux à profil asphérique.

Dans un mode de réalisation du verre selon l'invention, le premier profil de courbure de la porteuse présente une première courbure constante et ledit deuxième profil de courbure de la porteuse présente une deuxième courbure différente de la première courbure au moins localement en un point. Mais tous les points de la face, même ceux qui sont placés à l'extérieur de la première zone centrale, présentent compte tenu de l'addition de la nappe Fresnel et de la porteuse, une courbure constante et égale à ladite première courbure. Le profil des dents de Fresnel compense localement la différence entre la première et la deuxième courbure de sorte que globalement la courbure mesurée en tout point de la face résultant de la superposition de la porteuse et de la nappe Fresnel est constante et égale à la première courbure.

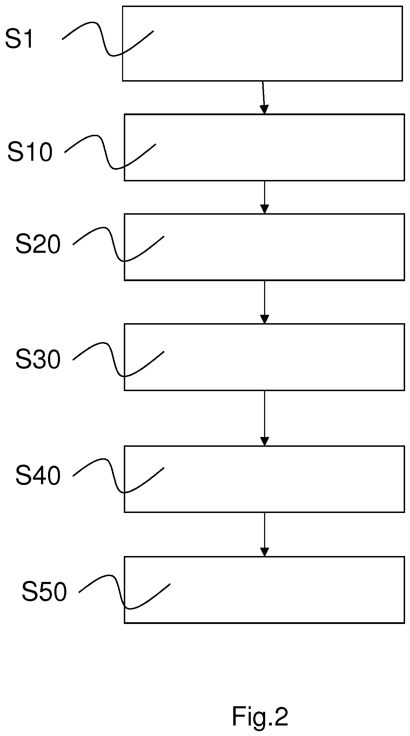

Sur la figure 2, on représente un ordinogramme d'un procédé de détermination d'une face de verre ophtalmique qui comporte une succession de 6 étapes S1, S10, S20, S30, S40 et S50.

On considère comme point de départ, une face d'un verre ophtalmique similaire à celui présenté à la figure 1a. La face a une forme circulaire et est délimité par un bord circulaire de rayon R et comporte une porteuse comprenant une première zone centrale, une zone périphérique annulaire. La première zone centrale est délimitée par une première frontière circulaire, la zone périphérique est délimitée d'une part par une deuxième frontière circulaire et d'autre part par le bord de la face. La porteuse présente une symétrie de révolution par rapport à un axe (D) normal à la porteuse et passant pas le centre géométrique de la porteuse. La première zone centrale et la zone périphérique annulaire présentent une symétrie de révolution par rapport au même axe.

L'étape S1 consiste à déterminer les profils radiaux de courbure de la première zone centrale et de la zone périphérique et appelés respectivement premier et deuxième profil.

La zone centrale 10 comporte habituellement une correction de puissance qui est imposé par une prescription. Son profil de courbure est imposé. Par exemple, le premier profil a une courbure constante dont la valeur est directement reliée à la prescription.

Le deuxième profil est déterminé sans lien avec le premier profil. Par exemple, il est choisi de façon à ce que la courbure au bord de la face soit sensiblement égale à la courbure d'une monture de lunettes dans laquelle le verre doit être monté. Par exemple, le deuxième profil a une courbure constante dont la valeur est directement reliée à la courbure de la monture

Le premier et le deuxième profil peuvent respectivement présenter une courbure constante qu'un évolution complexe mais continue suivant l'axe r.

L'étape S10 consiste à déterminer un premier rayon R1 de la première frontière et un deuxième rayon R2 de la deuxième frontière.

Le rayon R1 est déterminé entre 10 et 15 mm afin qu'une nappe Fresnel s, dont on reparlera plus bas, déterminée notamment à partir du profil de la porteuse et destinée à être superposée à la porteuse soit dépourvue d'anneau sur une deuxième zone centrale de rayon supérieur ou égal à 15mm.

La détermination du deuxième rayon R2 permet de délimiter une zone de transition qui est contigüe à la première zone centrale et à la zone périphérique. Plus l'écart entre le deuxième rayon R2 et le premier rayon est grand et moins le profil de courbure dans la zone de transition est contraint.

La détermination du deuxième rayon est par exemple fonction de la forme de la monture.

La détermination du deuxième rayon est par exemple fonction de la capacité temporale.

En effet, le deuxième rayon correspond à la distance séparant le centre géométrique de la zone dont la courbure est adaptée à la courbure de la monture. La capacité temporale correspond à la distance séparant le centre de la face et le bord du verre côté temporal (du coté de la tempe du porteur) c'est-à-dire l'endroit où se trouvera la monture. Il est donc avantageux que la capacité temporale soit au moins supérieure au deuxième rayon.

L'étape S20 consiste à déterminer un troisième profil de courbure de cette zone de transition.

Avantageusement, le troisième profil de courbure est déterminé de sorte que la porteuse ait une représentation continument dérivable jusqu'à l'ordre 4.

Avantageusement, le troisième profil de courbure suit une loi polynomiale d'ordre 3 en fonction de la distance au centre géométrique. L'étape S20 est mise en oeuvre à l'aide d'un ordinateur. Elle consiste par exemple à déterminer un profil de courbure qui soit adapté à la courbure du premier profil au voisinage de R1 et qui soit adapté à la courbure du deuxième profil au voisinage de R2 pour donner sous un format numérique un profil de courbure complet de la porteuse défini par morceaux sur la première zone centrale, la zone de transition et la zone périphérique.

Avantageusement l'étape S10 et l'étape S20 peuvent être mise en oeuvre simultanément pour déterminer de façon optimale, le premier et le deuxième rayon ainsi que le troisième profil.

L'étape S30 consiste à déterminer un profil de courbure cible de la face, où ledit profil de courbure cible est identique dans ladite première zone centrale au premier profil de courbure de la porteuse. L'étape S30 est mise en oeuvre à l'aide d'un ordinateur et consiste par exemple à définir un profil de courbure cible sous un format numérique.

Ce profil de courbure cible constitue le profil que l'on souhaite pouvoir mesurer sur les points de la face. Le profil cible peut être sphérique en totalité ou asphérique.

Avantageusement, le profil de courbure cible de la face présente une symétrie de révolution par rapport à l'axe D.

Avantageusement, le profil de courbure cible de la face est asphérique.

Avantageusement, le profil de courbure cible de la face a une représentation continument dérivable jusqu'à l'ordre 4.

L'étape S40 consiste à déterminer un profil de courbure pour la nappe Fresnel à partir d'une différence entre ledit profil de courbure cible et ledit profil de courbure complet de la porteuse.

On connait le profil de courbure cible et le profil de courbure complet de la porteuse qui ont par construction chacun une représentation continument dérivable jusqu'à l'ordre 4. L'étape S40 est mise en oeuvre par exemple à l'aide d'un ordinateur. S40 consiste par exemple notamment à réaliser une différence sous une forme numérique entre le profil de courbure cible et profil de courbure complet de la porteuse. On construit ainsi un profil radial d'une surface continue, à symétrie de révolution (non représentée sur les figures) autour d'un axe de symétrie D passant par le centre géométrique de la face et normal à la porteuse.

L'étape S50 consiste à déterminer une nappe Fresnel au moyen d'un découpage du profil de courbure continu obtenu à l'issue de l'étape S40. Lorsque le profil de courbure continu est asphérique, il en est de même pour la nappe Fresnel que l'on désignera comme « nappe Fresnel asphérique ».

Dans le cadre de l'étape S50, on impose une contrainte sur l'absence d'anneau sur la nappe Fresnel à l'intérieur d'une deuxième zone centrale circulaire centrée sur le centre géométrique qui a un rayon R3 supérieur à 15mm. De cette façon, on s'assure de ne pas produire de gêne visuelle pour le porteur. La satisfaction de cette contrainte est d'autant plus facile à tenir que par construction, le profil radial de la surface continue présente une courbure nulle sur la première zone centrale.

La porteuse et la nappe Fresnel ainsi déterminées peuvent être usinées en une seule fois par usinage direct de la face du verre.

Avantageusement, le premier profil de courbure de la porteuse présente une première courbure constante sur la première zone centrale et le profil de courbure cible de la face présente une courbure constante sur la première zone centrale, la zone de transition et la zone périphérique qui est égale à ladite première courbure, autrement dit, le profil de courbure cible a une courbure constante égale à ladite première courbure.

Avantageusement, le premier profil de courbure de la porteuse présente une première courbure constante sur la première zone centrale, ledit deuxième profil de courbure de la porteuse présente une deuxième courbure constante sur la zone périphérique et le profil de courbure cible de la face présente une courbure constante sur la zone périphérique.

Le procédé décrit ci-dessus peut être mis en oeuvre pour produire les quatre exemples de verres avantageux déjà cités. Le tableau qui suit synthétise les paramètres particuliers utilisés dans le procédé selon l'invention pour réaliser les 4 exemples de verres ophtalmiques

| | | 1^{er} mode de réalisation avantageux | 2^{eme} mode de réalisation avantageux | 3^{ième} mode de réalisation avantageux | 4^{ième} mode de réalisation avantageux |
|---|---|---|---|---|---|
| **Surface Porteuse** | | Face avant | Face avant | Face avant | Face arrière |
| Courbure porteuse | zone centrale | Base 8 | Base 13 | Base 4 | Base 10 |
| | zone périphérique | Base 4 | Base 4 | Base 8 | Base 4 |
| | zone de transition | Profil allure polynôme d'ordre 3 en r | Profil allure polynôme d'ordre 3 en r | Profil allure polynôme d'ordre 3 en r | Profil allure polynôme d'ordre 3 en r |
| Découpe en Zones | R1 | 10mm | 7mm | 10mm | 10mm |
| | R2 | 25mm | 30mm | 30mm | 25mm |
| **Cible de la face** | | Face avant | Face avant | Face avant | Face arrière |
| Courbure cible pour la face | zone centrale | Courbure constant Base 8 | Base 13 | Courbure constante Base 4 | Courbure constante Base 10 |
| | zone périphérique | | Base 8 | | |
| | zone de transition | | polynôme d'ordre 3 en r | | |

Dans ce qui précède, la référence à « un mode de réalisation » signifie qu'une caractéristique particulière, la structure, ou une caractéristique décrite en relation avec le mode de réalisation peut être incluse dans au moins une mise en oeuvre de l'invention. Les apparitions de l'expression «dans un mode de réalisation" à divers endroits dans la description détaillée qui précède ne se référent pas nécessairement tous au même mode de réalisation. De même, des modes de réalisation distincts ou alternatifs ne sont pas nécessairement mutuellement exclusifs d'autres modes de réalisation.

## Revendications

1. Procédé de détermination d'une face d'un verre ophtalmique, ladite face portant une surface constituée par une superposition d'une nappe Fresnel et d'une surface continue nommée « porteuse », ladite porteuse comportant un centre géométrique, une première zone centrale et une zone périphérique annulaire, ladite porteuse présentant une symétrie de révolution, ladite nappe Fresnel, la première zone centrale et la zone périphérique étant centrées sur ledit centre géométrique, la première zone centrale étant délimitée par une première frontière circulaire, la zone périphérique annulaire étant délimitée d'une part par une deuxième frontière circulaire et d'autre part par le bord de la face, le procédé étant mis en oeuvre par ordinateur et comprenant une étape pour :
(SI) déterminer un premier profil de courbure de ladite porteuse dans ladite première zone centrale et un deuxième profil de courbure de ladite porteuse dans ladite zone périphérique, le premier profil de courbure étant fonction de contraintes de prescription et le deuxième profile de courbure étant fonction de contraintes de courbure d'une monture ;
(S10) déterminer un premier rayon de ladite première frontière et un deuxième rayon de ladite deuxième frontière, le premier rayon étant déterminé entre 10 et 15 mm et le deuxième rayon étant fonction de la forme de la monture et/ou de la capacité temporale correspondant à la distance séparant le centre de la face et le bord du verre côté temporal;
(S20) déterminer un troisième profil de courbure d'une zone de transition de ladite porteuse, où ladite zone de transition est contigue à la première zone centrale et à ladite zone périphérique annulaire, et déterminer un profil de courbure complet de la porteuse comportant lesdits premier, deuxième et troisième profil de courbure de la porteuse ;
(S30) déterminer un profil de courbure cible de la face où ledit profil de courbure cible est identique dans ladite première zone centrale au premier profil de courbure de la porteuse ;
(S40) déterminer un profil de courbure continu à partir d'une différence entre ledit profil de courbure cible et ledit profil de courbure complet de la porteuse ;
(S50) déterminer la nappe Fresnel par un découpage dudit profil de courbure continu.

2. Procédé selon la revendication précédente **caractérisé en ce que** ledit premier profil de courbure de la porteuse présente une première courbure constante sur la première zone centrale et **en ce que** le profil de courbure cible de la face présente une courbure constante sur la première zone centrale, la zone de transition et la zone périphérique, où ladite courbure constante est égale à ladite première courbure.

3. Procédé selon la revendication 1, **caractérisé en ce que** ledit premier profil de courbure de la porteuse présente une première courbure constante sur la première zone centrale, ledit deuxième profil de courbure de la porteuse présente une deuxième courbure constante sur la zone périphérique et **en ce que** le profil de courbure cible de la face présente une courbure constante sur la zone périphérique.

4. Procédé selon l'une des revendications 1 à 3, la nappe Fresnel comportant une pluralité d'anneaux centrés sur le centre géométrique, chaque anneau étant déterminé à partir du profil de courbure continu et d'une hauteur d'anneau donnée, ladite hauteur d'anneau étant déterminée de façon à ce que la nappe Fresnel soit dépourvue d'anneau dans une deuxième zone centrale circulaire centrée sur ledit centre géométrique et de rayon supérieur ou égal à 15 mm.

5. Procédé selon l'une des revendications 1 à 4, **caractérisé en ce que** le troisième profil de courbure est déterminé de sorte que le profil de courbure complet de la porteuse a une représentation continûment dérivable jusqu'à l'ordre 4 et **en ce que** le profil de courbure cible de la face a une représentation continûment dérivable jusqu'à l'ordre 4.

6. Procédé selon la revendication 5, **caractérisé en ce que** le troisième profil de courbure suit une loi polynomiale d'ordre 3 en fonction de la distance radiale au centre géométrique.

7. Procédé selon l'une des revendications 1 à 6, **caractérisé en ce que** le deuxième rayon est déterminé de sorte que la valeur du deuxième rayon est inférieure à la valeur de la capacité temporale dudit verre.

## Patentansprüche

1. Verfahren zur Bestimmung einer Fläche eines Brillenglases, wobei die Fläche eine Oberfläche trägt, die aus einer Überlagerung einer Fresnelstruktur und einer zusammenhängenden Fläche, "Trägerstruktur" genannt, besteht, wobei die Trägerstruktur einen geometrischen Mittelpunkt, einen ersten zentralen Bereich und einen ringförmigen Umfangsbereich umfasst, wobei die Trägerstruktur eine Rotationssymmetrie aufweist, wobei die Fresnelstruktur, der erste zentrale Bereich und der Umfangsbereich um den geometrischen Mittelpunkt zentriert sind, wobei der erste zentrale Bereich von einer ersten kreisförmigen Grenze begrenzt wird, wobei der ringförmige Umfangsbereich einerseits von einer zweiten kreisförmigen Grenze und andererseits vom Rand der Fläche begrenzt wird, wobei das Verfahren von einem Computer durchgeführt wird und einen Schritt umfasst, um:
(SI) einen ersten Krümmungsverlauf der Trägerstruktur im ersten zentralen Bereich und einen zweiten Krümmungsverlauf der Trägerstruktur im Umfangsbereich zu bestimmen, wobei der erste Krümmungsverlauf von Vorgaben der Verschreibung abhängt und der zweite Krümmungsverlauf von Krümmungsanforderungen einer Fassung abhängt;
(S10) einen ersten Radius der ersten Grenze und einen zweiten Radius der zweiten Grenze zu bestimmen, wobei der erste Radius zwischen 10 und 15 mm bestimmt wird und der zweite Radius von der Form der Fassung und/oder von der Schläfenkapazität, die dem Abstand entspricht, der den Mittelpunkt der Fläche und den Rand des Glases auf der Schläfenseite trennt, abhängt;
(S20) einen dritten Krümmungsverlauf eines Übergangsbereichs der Trägerstruktur zu bestimmen, wobei der Übergangsbereich an den ersten zentralen Bereich und an den ringförmigen Umfangsbereich angrenzt, und einen vollständigen Krümmungsverlauf der Trägerstruktur zu bestimmen, der den ersten, zweiten und dritten Krümmungsverlauf der Trägerstruktur umfasst;
(S30) einen Ziel-Krümmungsverlauf der Fläche zu bestimmen, wobei der Ziel-Krümmungsverlauf im ersten zentralen Bereich identisch mit dem ersten Krümmungsverlauf der Trägerstruktur ist;
(S40) einen stetigen Krümmungsverlauf zu bestimmen, ausgehend von einer Differenz zwischen dem Ziel-Krümmungsverlauf und dem vollständigen Krümmungsverlauf der Trägerstruktur;
(S50) die Fresnelstruktur durch ein Zuschneiden des stetigen Krümmungsverlaufs zu bestimmen.

2. Verfahren nach dem vorhergehenden Anspruch, **dadurch gekennzeichnet, dass** der erste Krümmungsverlauf der Trägerstruktur eine erste konstante Krümmung auf dem ersten zentralen Bereich aufweist, und dadurch, dass der Ziel-Krümmungsverlauf der Fläche eine konstante Krümmung auf dem ersten zentralen Bereich, dem Übergangsbereich und dem Umfangsbereich aufweist, wobei diese konstante Krümmung gleich der ersten konstanten Krümmung ist.

3. Verfahren nach Anspruch 1, **dadurch gekennzeichnet, dass** der erste Krümmungsverlauf der Trägerstruktur eine erste konstante Krümmung auf dem ersten zentralen Bereich aufweist, der zweite Krümmungsverlauf der Trägerstruktur eine zweite konstante Krümmung auf dem Umfangsbereich aufweist, und dadurch, dass der Ziel-Krümmungsverlauf der Fläche eine konstante Krümmung auf dem Umfangsbereich aufweist.

4. Verfahren nach einem der Ansprüche 1 bis 3, wobei die Fresnelstruktur mehrere Ringe umfasst, die um den geometrischen Mittelpunkt zentriert sind, wobei jeder Ring ausgehend von dem stetigen Krümmungsverlauf und einer gegebenen Ringhöhe bestimmt wird, wobei die Ringhöhe derart bestimmt wird, dass die Fresnelstruktur in einem zweiten kreisförmigen zentralen Bereich, der um den geometrischen Mittelpunkt zentriert ist und dessen Radius größer als oder gleich 15 mm ist, nicht mit einem Ring versehen ist.

5. Verfahren nach einem der Ansprüche 1 bis 4, **dadurch gekennzeichnet, dass** der dritte Krümmungsverlauf derart bestimmt wird, dass der vollständige Krümmungsverlauf der Trägerstruktur eine Darstellung aufweist, die bis zur 4. Ordnung stetig differenzierbar ist, und dadurch, dass der Ziel-Krümmungsverlauf der Fläche eine Darstellung aufweist, die bis zur 4. Ordnung stetig differenzierbar ist.

6. Verfahren nach Anspruch 5, **dadurch gekennzeichnet, dass** der dritte Krümmungsverlauf, in Abhängigkeit vom radialen Abstand zum geometrischen Mittelpunkt, einer polynomialen Funktion 3. Grades folgt.

7. Verfahren nach einem der Ansprüche 1 bis 6, **dadurch gekennzeichnet, dass** der zweite Radius derart bestimmt wird, dass der Wert des zweiten Radius kleiner als der Wert der Schläfenkapazität des Glases ist.

## Claims

1. Method for defining one face of an ophthalmic lens, said face having a surface formed by superposing a Fresnel layer and a continuous surface referred to as the "carrier", said carrier comprising a geometric center, a first central zone and an annular peripheral zone, said carrier being axisymmetric, said Fresnel layer, the first central zone and the peripheral zone being centered on said geometric center, the first central zone being bounded by a first circular boundary, the annular peripheral zone being bounded on the one hand by a second circular boundary and on the other hand by the edge of the face, the method being implemented by computer and comprising a step of:
(S1) defining a first profile of curvature for said carrier in said first central zone and a second profile of curvature for said carrier in said peripheral zone, the first profile of curvature depending on prescription constraints and the second profile of curvature depending on curvature constraints of a frame;
(S10) defining a first radius for said first boundary and a second radius for said second boundary, the first radius being between 10 and 15 mm and the second radius depending on the shape of the frame and/or the temporal capacity corresponding to the distance separating the centre of the face and the edge of the lens temporal side;
(S20) defining a third profile of curvature for a transitional zone of said carrier, said transitional zone being contiguous to the first central zone and to said annular peripheral zone, and defining a complete profile of curvature for the carrier, comprising said first, second and third profile of curvatures of the carrier;
(S30) defining a target profile of curvature for the face, said target profile of curvature being identical in said first central zone to the first profile of curvature of the carrier;
(S40) defining a continuous profile of curvature on the basis of a difference between said target profile of curvature and said complete profile of curvature of the carrier; and
(S50) defining the Fresnel layer by cutting said continuous profile of curvature.

2. Method according to the preceding claim, **characterized in that** said first profile of curvature of the carrier has a first constant curvature in the first central zone **and in that** the target profile of curvature of the face has a constant curvature in the first central zone, the transitional zone and the peripheral zone, in which said constant curvature is equal to said first curvature.

3. Method according to Claim 1, **characterized in that** said first profile of curvature of the carrier has a first constant curvature in the first central zone, said second profile of curvature of the carrier has a second constant curvature in the peripheral zone **and in that** the target profile of curvature of the face has a constant curvature in the peripheral zone.

4. Method according to one of Claims 1 to 3, the Fresnel layer comprising a plurality of rings centered on the geometric center, each ring being defined on the basis of the continuous profile of curvature and of a given ring height, said ring height being defined so that the Fresnel layer is devoid of rings in a circular second central zone centered on said geometric center and of radius larger than or equal to 15 mm.

5. Method according to one of Claims 1 to 4, **characterized in that** the third profile of curvature is defined so that the complete profile of curvature of the carrier has a representation that is continuously derivable up to the 4th order and **in that** the target profile of curvature of the face has a representation that is continuously derivable up to the 4th order.

6. Method according to Claim 5, **characterized in that** the third profile of curvature is described by a 3rd- order polynomial equation as a function of the radial distance to the geometric center.

7. Method according to one of Claims 1 to 6, **characterized in that** the second radius is defined so that the value of the second radius is lower than the value of the temporal capacity of said lens.
